# FASCICULE DE BREVET EUROPEEN

(11) **EP 1 591 333 B1**
(45) Date de publication et mention de la délivrance du brevet: **14.03.2007**
(21) Numéro de dépôt: 05007175.2
(22) Date de dépôt: 01.04.2005
(51) Int. Cl.: B60T 13/575

(54) **Servofrein comportant un palpeur muni d'un ergot.**
Bremskraftverstärker mit einem mit einer Rippe versehenen Ventilkolben
Brake booster with a sensing end of the thrust rod provided with a nib

(30) Priorité: 29.04.2004 FR 0404615
(43) Date de publication de la demande: 02.11.2005
(73) Titulaire: ROBERT BOSCH GMBH, 70442 Stuttgart (DE)
(72) Inventeur: Diaz Bueno, Ignacio, 78170 La Celle Saint Cloud (FR); Caquet, Christian, 77181 Courtry (FR); Gebauer, Maurice, 93270 Sevran (FR)
(74) Mandataire: Hurwic, Aleksander Wiktor

(56) Documents cités:
- EP-A- 0 901 950
- FR-A- 2 825 059
- GB-A- 2 268 783

## Description

L'invention concerne un servofrein pour un véhicule automobile, comme décrit par exemple dans le document FR-A-2825059.

L'invention concerne plus particulièrement un servofrein pour un véhicule automobile, du type qui comporte un servomoteur pneumatique d'assistance au freinage actionnant un maître-cylindre, du type dans lequel le servomoteur comporte une enveloppe rigide à l'intérieur de laquelle est mobile une cloison transversale délimitant de façon étanche une chambre avant, soumise à une première pression, et une chambre arrière soumise à une deuxième pression, du type dans lequel le servomoteur comporte un piston mobile, solidaire de la cloison mobile, qui comporte une face avant qui est susceptible de solliciter un piston primaire du maître-cylindre par l'intermédiaire d'un disque de réaction qui est solidaire d'une extrémité arrière du piston primaire, du type dans lequel le servomoteur comporte une tige de commande qui se déplace dans le piston sélectivement en fonction d'un effort axial d'entrée exercé vers l'avant à l'encontre d'un effort de rappel exercé sur la tige par un ressort de rappel, du type dans lequel l'extrémité avant de la tige de commande comporte au moins un plongeur, monté coulissant dans le piston, qui est lié à au moins un siège annulaire d'un clapet qui est susceptible d'établir dans la chambre arrière une deuxième pression supérieure à la première pression régnant dans la chambre avant pour provoquer le déplacement de la cloison mobile, du type dans lequel le servomoteur comporte un palpeur, agencé à l'extrémité avant du plongeur et traversant un alésage débouchant du piston qui, dans une position de repos de la tige de commande, est agencé à une distance de saut déterminée du disque de réaction et qui est susceptible, lorsque la tige de commande est actionnée suivant un effort d'entrée d'intensité supérieure à une première intensité déterminée, de venir au contact du disque de réaction de manière à transmettre au plongeur et à la tige de commande l'effort de réaction du maître-cylindre.

On connaît de nombreux exemples de servofreins de ce type.

Dans un tel servofrein, l'effort de sortie du servomoteur qui est appliqué au piston primaire du maître-cylindre est fonction de l'effort d'entrée appliqué à la tige de commande.

Typiquement, lors de l'application d'un effort de freinage d'une intensité supérieure à une intensité déterminée, on distingue quatre phases suivies par l'effort de sortie.

Au cours d'une première phase dite de course morte, l'effort de sortie est sensiblement nul. Cette course correspond à la course de la tige de commande nécessaire pour surmonter l'effort du ressort de rappel.

Puis, au cours d'une deuxième phase dite de saut, et pour une valeur déterminée de l'effort d'entrée, l'effort de sortie croît brutalement jusqu'à une première valeur déterminée, indépendamment de la valeur de l'effort d'entrée. Cette course correspond à l'absorption de la distance de saut par le palpeur.

Puis au cours d'une troisième phase dite d'assistance, l'effort de sortie croît sensiblement linéairement à partir de la première valeur déterminée jusqu'à une deuxième valeur déterminée en fonction de l'effort d'entrée. Cette phase correspond à l'assistance de l'effort de sortie par le servomoteur.

Enfin, au cours d'une quatrième phase dite de saturation, l'effort de sortie croît sensiblement linéairement à partir de la deuxième valeur déterminée en fonction de l'effort d'entrée. La croissance de l'effort de sortie est inférieure à la croissance pendant la phase d'assistance, car la paroi mobile du servomoteur est parvenue en fin de course et ne fournit plus d'assistance. Tout effort de freinage supplémentaire n'est fourni que par la tige de commande.

Cette conception pose un problème de progressivité. En effet, au cours de la deuxième phase, l'effort de sortie croît brutalement pour une valeur déterminée de l'effort exercé sur la tige de commande. L'effort de réaction qui en résulte croît lui aussi brutalement et il en résulte une sensation à la pédale désagréable pour le conducteur du véhicule.

Par ailleurs, la transition entre les deuxième et troisième phases s'effectue elle aussi brutalement, et provoque un ralentissement brusque de la croissance de l'effort de sortie, ce qui se traduit, au moment cette transition, par une sensation de flou dans l'effort de réaction qui est transmis à la pédale et que ressent le conducteur.

Pour remédier à ces inconvénients, l'invention propose un servofrein comportant un palpeur d'un nouveau type permettant d'assurer une progressivité entre l'effort de sortie et l'effort d'entrée au cours d'au moins une des deuxième ou troisième phases.

Dans ce but, l'invention propose un servofrein du type décrit précédemment, caractérisé en ce que l'extrémité avant du palpeur comporte au moins un ergot qui fait saillie parallèlement à la direction axiale et qui est destiné à permettre au palpeur, dans au moins une partie d'une phase de saut au cours de laquelle il parcourt la distance de saut avant d'entrer totalement en contact avec le disque de réaction, d'assurer une proportionnalité entre l'effort qui lui est transmis par le plongeur et l'effort exercé sur le piston primaire du maître cylindre.

Selon d'autres caractéristiques de l'invention :
- l'extrémité avant du palpeur comporte un ergot unique coaxial au palpeur,
- l'ergot est de forme sensiblement cylindrique et son diamètre est inférieur au diamètre du palpeur,
- le diamètre de l'ergot est égal au diamètre du palpeur,
- l'extrémité de l'ergot est constituée d'une face transversale plane,
- l'extrémité de l'ergot est constituée d'une face transversale plane dans laquelle débouche une cavité,
- la cavité présente une forme tronconique,
- l'extrémité de l'ergot est de forme tronconique.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un servofrein selon l'invention représenté dans une position de repos,
- la figure 2 est une vue de détail en coupe axiale d'un servofrein selon l'invention représenté en début de freinage dans les phases de course morte et de saut,
- la figure 3 est une vue de détail en coupe axiale d'un servofrein selon l'invention représenté en cours de freinage dans la phase d'assistance,
- la figure 4 est une vue de détail en coupe axiale d'un servofrein selon l'invention représenté en cours de freinage dans la phase de saturation,
- la figure 5 est une vue de détail en coupe axiale d'un servofrein selon l'invention représenté en cours de relâchement du freinage,
- la figure 6 est une vue en coupe axiale représentant un palpeur conventionnel,
- les figures 7 à 11 sont , des vues en coupe axiale représentant différents modes de réalisation d'un palpeur pour un servofrein selon l'invention,
- les figures 12 à 16 sont des courbes représentant l'effort de sortie en fonction de l'effort d'entrée associées respectivement aux palpeurs des figures 6 et 8 à 11.

Dans la description qui va suivre, des chiffres de référence identiques désignent des pièces identiques ou ayant des fonctions similaires.

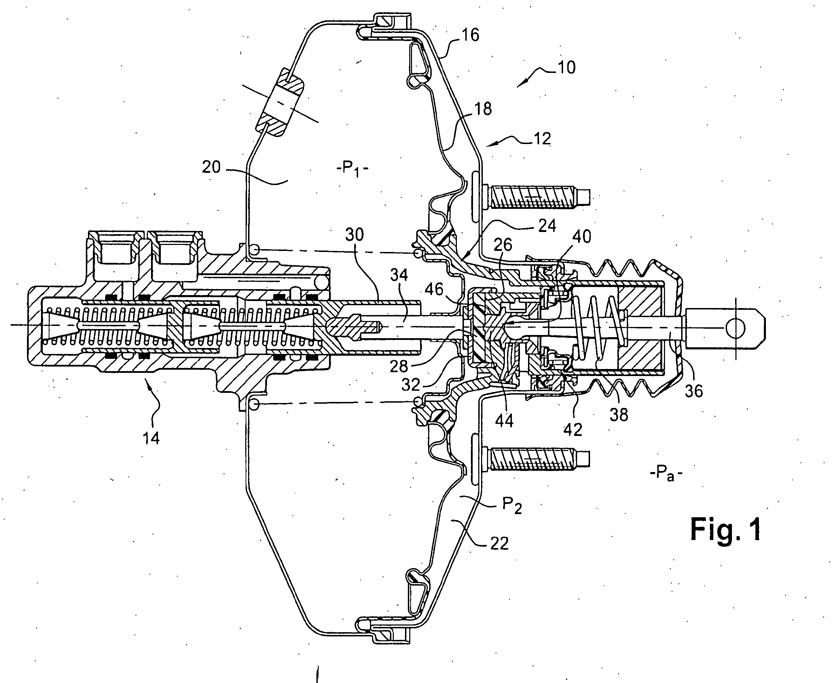

Par convention, les termes "avant", "arrière", supérieur", "inférieur" désignent respectivement des éléments ou des positions orientés respectivement vers la gauche, la droite, le haut, ou le bas des figures 1 à 16.

On a représenté à la figure 1 l'ensemble d'un servofrein 10 pour un véhicule automobile.

De manière connue, le servofrein 10 comporte un servomoteur 12 pneumatique d'assistance au freinage actionnant un maître-cylindre 14. Le servomoteur 12 comporte une enveloppe 16 rigide à l'intérieur de laquelle est mobile une cloison 18 transversale délimitant de façon étanche une chambre avant 20, soumise à une première pression "P₁", et une chambre arrière 22 soumise à une deuxième pression. "P₂".

A l'intérieur de l'enveloppe 16, le servomoteur 12 comporte un piston mobile 24, solidaire de la cloison mobile 18, qui comporte une face avant 26 qui est susceptible de solliciter un piston primaire 30 du maître-cylindre 14 par l'intermédiaire d'un disque 28 de réaction qui est solidaire d'une extrémité arrière du piston primaire 30. En particulier, le disque 28 de réaction est reçu dans une cage 32 solidaire d'une tige 34 qui est reçue dans le piston primaire 30 du maître cylindre 14.

Le servomoteur 12 comporte une tige 36 de commande qui se déplace dans le piston 24 sélectivement en fonction d'un effort axial d'entrée exercé vers l'avant à l'encontre d'un effort de rappel exercé sur la tige 36 par un ressort 38 de rappel.

De manière connue, l'extrémité avant de la tige 36 de commande comporte au moins un plongeur 40, monté coulissant dans le piston 24, qui est lié à au moins un siège annulaire d'un clapet 42 qui est susceptible d'établir dans la chambre arrière 22 une deuxième pression "P₂" supérieure à la première pression "P₁" régnant dans la chambre avant 20 pour provoquer le déplacement de la cloison mobile 18. Par exemple, la chambre arrière 22 peut être mise en communication avec le milieu extérieur soumis à la pression atmosphérique "Pₐ" qui règne à l'extérieur du servofrein 10.

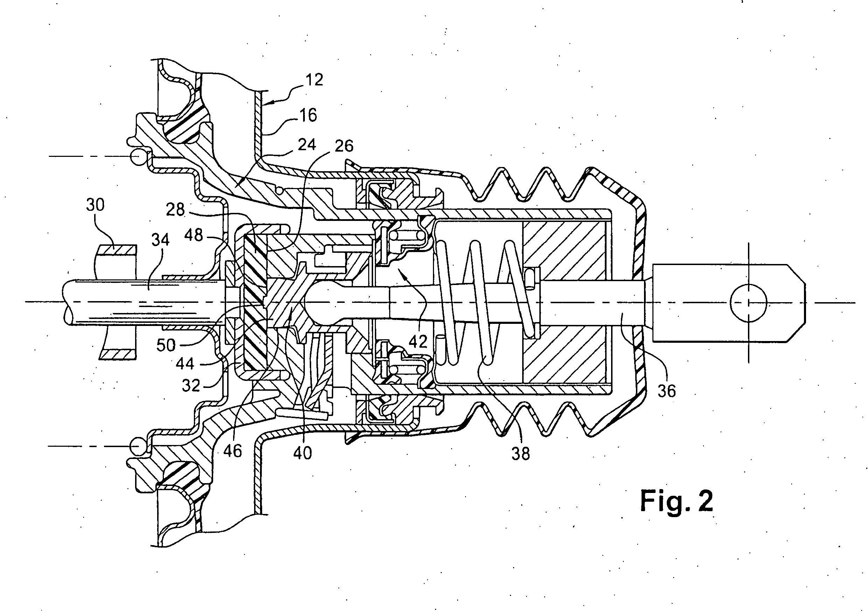

Le servomoteur 12 comporte un palpeur 44, agencé à l'extrémité avant du plongeur 40 et traversant un alésage 46 débouchant du piston 24 qui, dans une position de repos de la tige 36 de commande, est agencé à une distance de saut déterminée du disque 28 de réaction et qui est susceptible, lorsque la tige 36 de commande est actionnée suivant un effort d'entrée d'intensité supérieure à une première intensité déterminée, de venir au contact du disque 28 de réaction de manière à transmettre au plongeur 40 et à la tige 36 de commande l'effort de réaction du maître-cylindre 14, comme représenté aux figures 2 à 4.

Typiquement, lors de l'application d'un effort de freinage d'une intensité supérieure à une intensité déterminée sur la tige de commande 36, on distingue quatre phases suivies par l'effort de sortie qui est appliqué au piston primaire 30.

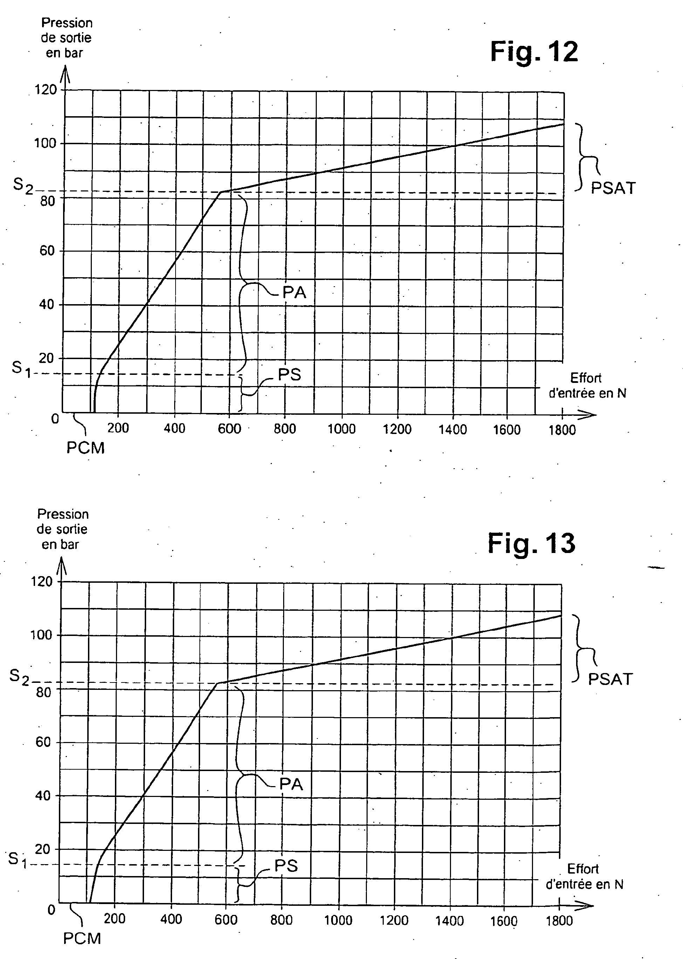

Ces phases ont été représentées sur la figure 12, qui représente en ordonnées l'effort de sortie exprime en Bars qui est appliqué au piston primaire 30 en fonction de l'effort exercé sur la tige de commande 36, représenté en abscisses et exprimé en Newtons.

Au cours d'une première phase "PCM" dite de course morte, l'effort de sortie est sensiblement nul. Cette course correspond à la course de la tige 36 de commande nécessaire pour surmonter l'effort de son ressort 38 de rappel.

Puis, au cours d'une deuxième phase "PS" dite de saut, et pour une valeur déterminée de l'effort d'entrée, l'effort de sortie croit brutalement jusqu'à une première valeur "S1" déterminée, indépendamment de la valeur de l'effort d'entrée. Cette course correspond à l'absorption de la distance de saut par le palpeur 44.

Puis au cours d'une troisième phase "PA" dite d'assistance, l'effort de sortie croit sensiblement linéairement à partir de la première valeur "S1" déterminée jusqu'à une deuxième valeur 'S2" déterminée en fonction de l'effort d'entrée.

Cette phase "PA" correspond à l'assistance de l'effort de sortie par le servomoteur.

Enfin, au cours d'une quatrième phase "PSAT" dite de saturation, l'effort de sortie croit sensiblement linéairement à partir de la deuxième valeur "S2" déterminée en fonction de l'effort d'entrée. La croissance de l'effort de sortie est inférieure à la croissance pendant la phase d'assistance, car la paroi 18 mobile du servomoteur est parvenue en fin de course et ne fournit plus d'assistance. Tout effort de freinage supplémentaire n'est' fourni que par la tige 36 de commande.

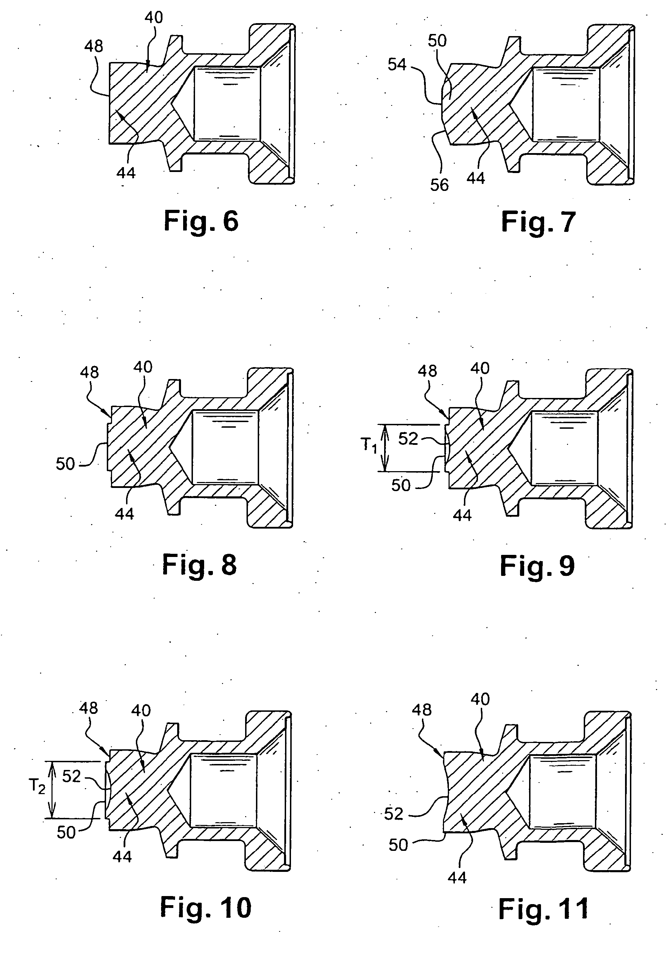

Comme on peut le constater sur la figure 12, qui est associé à un plongeur 40 comportant un palpeur 44 d'extrémité 48 plane semblable à celui qui a été représenté à la figure 6, cette conception pose un problème de progressivité. En effet, au cours de la deuxième phase "PS", l'effort de sortie croit brutalement pour une valeur déterminée de l'effort exercé sur la tige 36 de commande. L'effort de réaction qui en résulte croit lui aussi brutalement et il en résulte une sensation à la pédale désagréable pour le conducteur du véhicule.

Par ailleurs, la transition entre les deuxième et troisième phases "PS" et "PA" s'effectue elle aussi brutalement, c'est à dire qu'elle se traduit sur la courbe par un changement de pente marqué, et elle provoque un ralentissement brusque de la croissance de l'effort de sortie, ce qui se traduit, au moment cette transition, par une sensation de flou dans l'effort de réaction qui est transmis à la pédale et que ressent le conducteur.

Pour remédier à ces inconvénients, l'invention propose un servofrein comportant un palpeur 44 d'un nouveau type permettant d'assurer une progressivité entre l'effort de sortie et l'effort d'entrée au cours d'au moins une des deux phases "PS" et "PA" précitées.

Dans ce but, l'invention propose un servofrein du type décrit précédemment, caractérisé en ce que l'extrémité avant 48 du palpeur 44 comporte au moins un ergot 50 qui fait saillie parallèlement à la direction axiale et qui est destiné à permettre au palpeur 44, dans au moins une partie de la phase ''PS" de saut au cours de laquelle il parcourt la distance de saut avant d'entrer totalement en contact avec le disque 28 de réaction, d'assurer une proportionnalité entre l'effort qui lui est transmis par le plongeur 40 et l'effort exercé sur le piston primaire 30 du maître cylindre 14.

Dans le mode de réalisation préféré de l'invention, l'extrémité 48 avant du palpeur 44 comporte un ergot 50 unique agencé coaxialement au palpeur 40.

Cette configuration n'est pas limitative de l'invention, et l'extrémité avant 48 du palpeur 44 pourrait comporter une pluralité d'ergots 50 axiaux de forme déterminée répartis angulairement de manière angulaire autour de l'axe du palpeur 44.

Selon des premier à troisième modes de réalisation de l'invention qui ont été représentés aux figures 8 à 10, l'ergot 50 est de forme sensiblement cylindrique et son diamètre est inférieur au diamètre du palpeur 44.

Plus particulièrement, dans le premier mode de réalisation de l'invention qui a été représenté à la figure 8, l'extrémité de l'ergot 50 est constituée d'une face transversale plane.

Selon cette conception, comme l'illustre la figure 1, le palpeur 44 est initialement agencé à une distance de saut déterminée du disque 28 de réaction.

A l'issue de la phase "PCM" de course morte, comme l'illustre la figure 2, l'ergot 50 pénètre dans le disque 28 de réaction alors que même le palpeur 44 n'a pas encore intégralement pénétré dans ledit disque 28 de réaction et il transmet une partie de l'effort d'entrée de la tige de commande 36. Cette configuration est établie tout le long de la course "PS" de saut" et permet d'obtenir une progressivité de l'effort de sortie en fonction de l'effort d'entrée pour le palpeur 44 du type des figures 1 à 4.

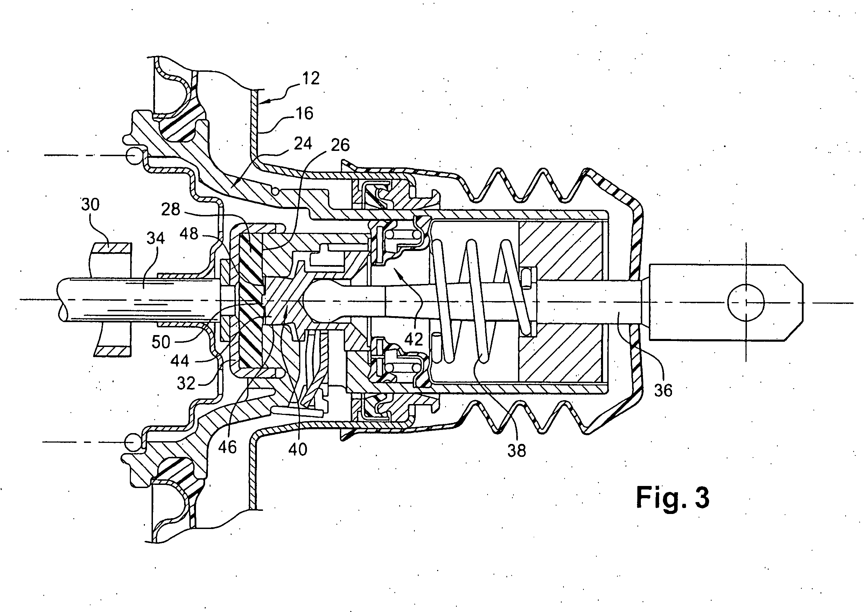

Puis, au cours de la phase "PA" d'assistance qui correspond à la figure 3, seul l'ergot 50 est en contact avec le disque 28 de réaction. L'effort de sortie est fonction de l'effort d'entrée et de l'effort d'assistance du servomoteur 12.

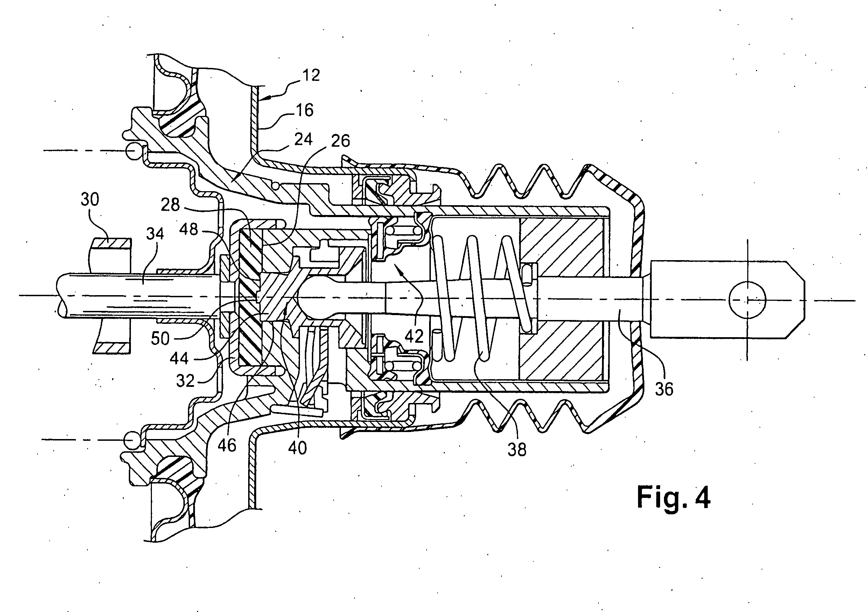

Enfin, au cours de la phase "PSAT" de saturation qui correspond à la figure 4, le palpeur 44 pénètre totalement dans le disque 28 de réaction et transmet pleinement l'effort d'entrée.

L'effort de sortie ne reçoit alors plus d'effort d'assistance supplémentaire du servomoteur 12.

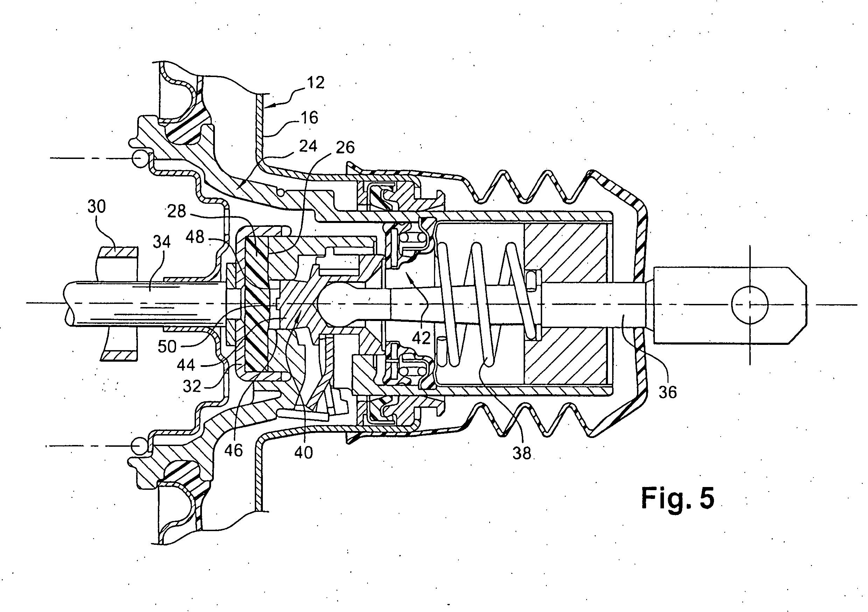

Si l'effort d'entrée exercé sur la tige 36 de commande est relâché, le palpeur 44 et l'ergot 50 se retirent du disque 28 de réaction, comme représenté à la figure 5.

Dans cette configuration, comme on peut le voir à la figure 13, lors de la deuxième phase "PS" de saut, l'effort de sortie croît rapidement et proportionnellement à l'effort d'entrée.

Par ailleurs, la transition entre les deuxième et troisième phases "PS" et "PA" s'effectue progressivement, supprimant de ce fait l'effet de flou ressenti à la pédale.

Dans les deuxième et troisième modes de réalisation de l'invention qui ont été représentés aux figures 9 et 10, l'extrémité 48 de l'ergot 50 est constituée d'une face transversale plane dans laquelle débouche une cavité 52.

De préférence, la cavité 52 présente une forme tronconique, mais cette configuration n'est pas limitative de l'invention, et elle pourrait être conformée en forme de portion de sphère.

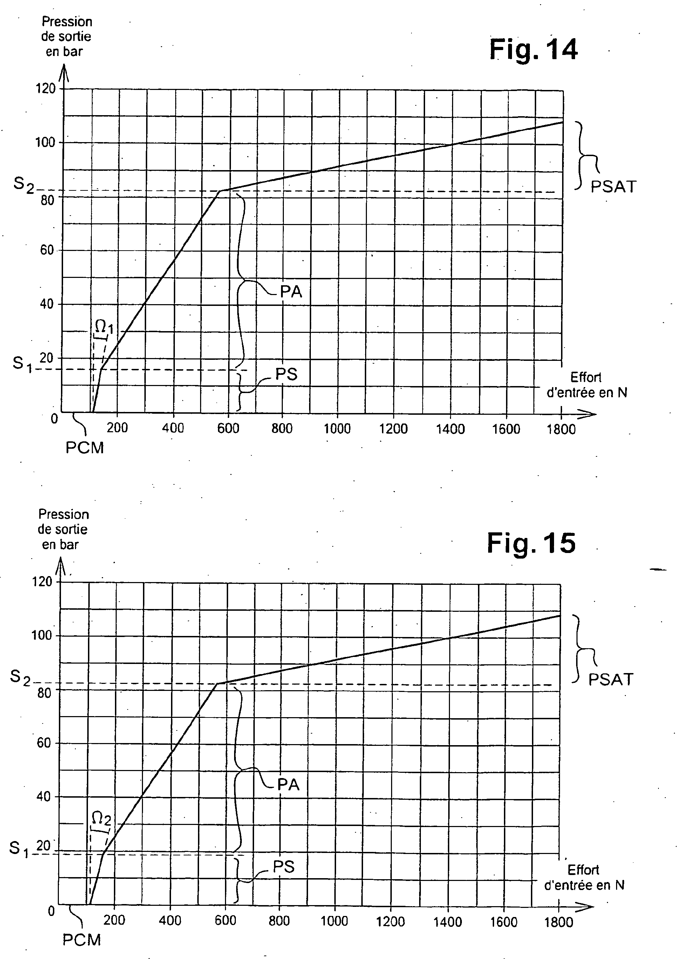

Dans cette configuration, comme on peut le voir aux figures 14 et 15, lors de la deuxième phase "PS" de saut, l'effort de sortie croît rapidement et proportionnellement à l'effort d'entrée. Plus le diamètre "T1", "T2" de l'ergot 50 est réduit, plus la valeur de l'effort de sortie "S2" marquant la transition entre les deuxième et troisième phases "PS" et "PA" est réduite et autrement dit, plus la troisième phase "PA" d'assistance intervient tôt. La pente "Ω1" et "Ω2" de la courbe dans la phase "PS" est directement fonction de la valeur associée du diamètre "T1", "T2" de l'ergot 50 associé.

Dans les quatrième, et cinquième modes de réalisation de l'invention qui ont été représentés aux figures 7 et 1 1 , le diamètre de l'ergot 50 est égal au diamètre du palpeur 44.

Dans cette configuration l'ergot 50 consiste donc en une conformation particulière de l'extrémité du palpeur 44.

Plus particulièrement, dans le quatrième mode de réalisation de l'invention de la figure 7, l'extrémité 48 de l'ergot 50 est de forme tronconique. Elle comporte une face plane 54 dont la portée tronconique 56 rejoint les bords du palpeur 44.

Cette configuration n'est pas limitative de l'invention, et il sera compris que l'extrémité 48 de l'ergot 50 pourrait être de forme sphérique sans changer la nature de l'invention.

D'une manière analogue, dans le cinquième mode de réalisation de l'invention qui a été représenté à la figure 11, l'extrémité 48 de l'ergot 50 est constituée d'une face transversale plane, de même diamètre que le palpeur 44, dans laquelle débouche une cavité 52. Cette cavité 52 est préférentiellement de forme tronconique mais elle pourrait être d'une autre forme, par exemple sphérique.

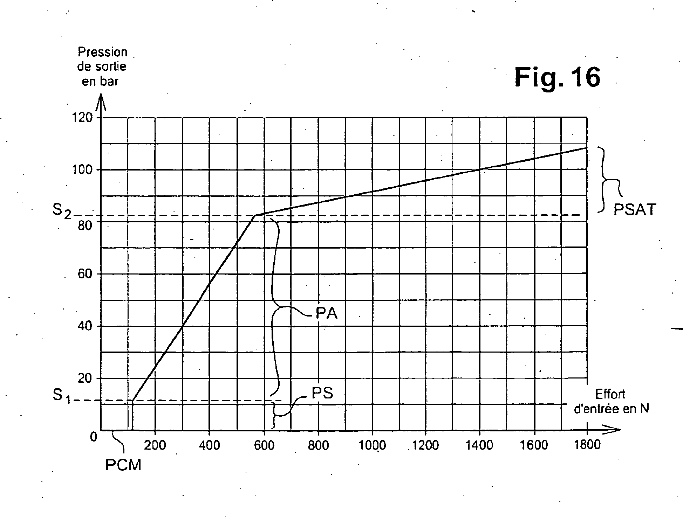

Dans cette configuration, comme on peut le voir à la figure 16, la transition entre les deuxième et troisième phases "PS" et "PA" s'effectue progressivement, supprimant de ce fait l'effet de flou ressenti à la pédale.

L'invention permet donc de modifier sensiblement les sensations transmises à la pédale par la tige de commande, et d'assurer un meilleur confort d'utilisation d'un servofrein 10.

## Revendications

1. Servofrein (10) pour un véhicule automobile, du type qui comporte un servomoteur (12) pneumatique d'assistance au freinage actionnant un maître-cylindre (14),
du type dans lequel le servomoteur (12) comporte une enveloppe (16) rigide à l'intérieur de laquelle est mobile une cloison (18) transversale délimitant de façon étanche une chambre avant (20), soumise à une première pression (P₁), et une chambre arrière (22) soumise à une deuxième pression (P₂),
du type dans lequel le servomoteur (12) comporte un piston mobile (24), solidaire de la cloison mobile (18), qui comporte une face avant (26) qui est susceptible de solliciter un piston primaire (30) du maître-cylindre (14) par l'intermédiaire d'un disque (28) de réaction qui est solidaire d'une extrémité arrière du piston primaire (30),
du type dans lequel le servomoteur (12) comporte une tige (36) de commande qui se déplace dans le piston (24) sélectivement en fonction d'un effort axial d'entrée exercé vers l'avant à l'encontre d'un effort de rappel exercé sur la tige (32) par un ressort (38) de rappel,
du type dans lequel l'extrémité avant de la tige (32) de commande comporte au moins un plongeur (40), monté coulissant dans le piston (24), qui est lié à au moins un siège annulaire d'un clapet (42) qui est susceptible d'établir dans la chambre arrière (22) une deuxième pression (P₂) supérieure à la première pression (P₁) régnant dans la chambre avant (20) pour provoquer le déplacement de la cloison mobile (18),
du type dans lequel le servomoteur (12) comporte un palpeur (44), agencé à l'extrémité avant du plongeur (40) et traversant un alésage (46) débouchant du piston (24) qui, dans une position de repos de la tige (36) de commande, est agencé à une distance de saut déterminée du disque (28) de réaction et qui est susceptible, lorsque la tige (36) de commande est actionnée suivant un effort d'entrée d'intensité supérieure à une première intensité déterminée, de venir au contact du disque (28) de réaction de manière à transmettre au plongeur (40) et à la tige (36) de commande l'effort de réaction du maître-cylindre (14),
**caractérisé en ce que** l'extrémité avant (48) du palpeur (44) comporte au moins un ergot (50) qui fait saillie parallèlement à la direction axiale et qui est destiné à permettre au palpeur (44), dans au moins une partie d'une phase (PS) de saut au cours de laquelle il parcourt la distance de saut avant d'entrer totalement en contact avec le disque (28) de réaction, d'assurer une proportionnalité entre l'effort qui lui est transmis par le plongeur (40) et l'effort exercé sur le piston primaire (30) du maître cylindre (14).

2. Servofrein (10) selon la revendication 1, **caractérisé en ce que** l'extrémité avant (48) du palpeur (44) comporte un ergot (50) unique coaxial au palpeur (44).

3. Servofrein (10) selon la revendication précédente, **caractérisé en ce que** l'ergot (50) est de forme sensiblement cylindrique et **en ce que** son diamètre est inférieur au diamètre du palpeur (44).

4. Servofrein (10) selon la revendication 2, **caractérisé en ce que** le diamètre de l'ergot (50) est égal au diamètre du palpeur (44).

5. Servofrein (10) selon la revendication 3, **caractérisé en ce que** l'extrémité (48) de l'ergot est constituée d'une face transversale plane.

6. Servofrein (10) selon l'une des revendications 3 ou 4, **caractérisé en ce que** l'extrémité (48) de l'ergot (50) est constituée d'une face transversale plane dans laquelle débouche une cavité (52).

7. Servofrein (10) selon la revendication précédente, **caractérisé en ce que** la cavité (52) présente une forme tronconique.

8. Servofrein (10) selon la revendication 5, **caractérisé en ce que** l'extrémité (48) de l'ergot (50) est de forme tronconique.

## Claims

1. Boosted brake (10) for a motor vehicle, of the type which comprises a pneumatic brake booster (12) actuating a master cylinder (14),
of the type in which the booster (12) comprises a rigid casing (16) inside which can move a transverse partition (18) sealably delimiting a front chamber (20) subjected to a first pressure (P₁) and a rear chamber (22) subjected to a second pressure (P₂),
of the type in which the booster (12) comprises a moving piston (24) fixed to the moving partition (18) and comprising a front face (26) which can act on a primary piston (30) of the master cylinder (14) by way of a reaction disk (28) which is fixed to a rear end of the primary piston (30),
of the type in which the booster (12) comprises a control rod (36) which moves in the piston (24) selectively as a function of an axial input force exerted forward against a return force exerted on the rod (36) by a return spring (38),
of the type in which the front end of the control rod (36) comprises at least one plunger (40) which is mounted slideably in the piston (24) and is connected to at least one annular seat of a valve (42) which is able to set up in the rear chamber (22) a second pressure (P₂) which is greater than the first pressure (P₁) prevailing in the front chamber (20) so as to cause the moving partition (18) to move,
of the type in which the booster (12) comprises a feeler (44), arranged at the front end of the plunger (40) and passing through a bore (46) leading from the piston (24), which, when the control rod (36) is in a rest position, is arranged at a defined jump distance from the reaction disk (28) and which is able, when the control rod (36) is actuated with an input force whose intensity is greater than a first defined intensity, to come into contact with the reaction disk (28) in such a way as to transmit to the plunger (40) and to the control rod (36) the reaction force of the master cylinder (14),
**characterized in that** the front end (48) of the feeler (44) comprises at least one stud (50) which projects parallel to the axial direction and which is intended to enable the feeler (44), in at least one part of a jump phase (PS) during which it covers the jump distance before coming fully into contact with the reaction disk (28), to provide proportionality between the force which is transmitted to it by the plunger (40) and the force exerted on the primary piston (30) of the master cylinder (14).

2. Boosted brake (10) according to Claim 1, **characterized in that** the front end (48) of the feeler (44) comprises a single stud (50) which is coaxial with the feeler (44).

3. Boosted brake (10) according to preceding claim, **characterized in that** the stud (50) is substantially cylindrical in shape and **in that** its diameter is less than the diameter of the feeler (44).

4. Boosted brake (10) according to Claim 2, **characterized in that** the diameter of the stud (50) is equal to the diameter of the feeler (44).

5. Boosted brake (10) according to Claim 3, **characterized in that** the end (48) of the stud consists of a flat transverse face.

6. Boosted brake (10) according to either of Claims 3 and 4, **characterized in that** the end (48) of the stud (50) consists of a flat transverse face into which opens a cavity (52).

7. Boosted brake (10) according to the preceding claim, **characterized in that** the cavity (52) has a frustoconical shape.

8. Boosted brake (10) according to Claim 5, **characterized in that** the end (48) of the stud (50) is frustoconical in shape.

## Patentansprüche

1. Servobremse (10) für ein Kraftfahrzeug, vom Typ, der einen pneumatischen Servomotor (12) zur Bremsunterstützung aufweist, welcher einen Hauptzylinder (14) betätigt,
vom Typ, bei dem der Servomotor (12) ein starres Gehäuse (16) aufweist, in dem eine quer verlaufende Wand (18) beweglich ist, die in dichter Weise eine vordere Kammer (20), die einem ersten Druck (P₁) ausgesetzt ist, und eine hintere Kammer (22) begrenzt, die einem zweiten Druck (P₂) ausgesetzt ist,
vom Typ, bei dem der Servomotor (12) einen beweglichen, fest mit der beweglichen Wand (18) verbundenen Kolben (24) aufweist, der eine vordere Fläche (26) aufweist, die einen Primärkolben (30) des Hauptzylinders (14) mittels einer Reaktionsscheibe (28) beaufschlagen kann, welche fest mit einem hinteren Ende des Primärkolbens (30) verbunden ist,
vom Typ, bei dem der Servomotor (12) eine Steuerstange (36) aufweist, die sich im Kolben (24) selektiv in Abhängigkeit von einer axialen Eingangskraft verlagert, welche entgegen einer durch eine Rückstellfeder (38) auf die Stange (36) ausgeübten Rückstellkraft nach vorne ausgeübt wird,
vom Typ, bei dem das vordere Ende der Steuerstange (36) mindestens einen Tauchkolben (40) aufweist, der im Kolben (24) gleitend angebracht ist und mit mindestens einem ringförmigen Sitz eines Ventilelements (42) verbunden ist, das in der hinteren Kammer (22) einen zweiten Druck (P₂) aufbauen kann, der größer ist als der erste, in der vorderen Kammer (20) herrschende Druck (P₁), um die Verlagerung der beweglichen Wand (18) zu bewirken,
vom Typ, bei dem der Servomotor (12) einen Taster (44) aufweist, der am vorderen Ende des Tauchkolbens (40) angeordnet ist und eine Bohrung (46) durchquert, die aus dem Kolben (24) ausgeht, der in der Ruheposition der Steuerstange (36) in einer bestimmten Sprungentfernung von der Reaktionsscheibe (28) angeordnet ist und der mit der Reaktionsscheibe (28) in Kontakt gelangen kann, wenn die Steuerstange (36) gemäß einer Eingangskraft betätigt wird, deren Stärke größer ist als eine erste bestimmte Stärke, so dass dem Tauchkolben (40) und der Steuerstange (36) die Reaktionskraft des Hauptzylinders (14) übertragen wird,
**dadurch gekennzeichnet, dass** das vordere Ende (48) des Tasters (44) mindestens eine Nase (50) aufweist, die parallel zur Axialrichtung hervorsteht und es dem Taster (44) ermöglichen soll, während mindestens eines Teils einer Sprungphase (PS), in der er sich über die Sprungentfernung bewegt, bevor er vollständig mit der Reaktionsscheibe (28) in Kontakt gelangt, eine Proportionalität zwischen der Kraft, die ihm von dem Tauchkolben (40) übertragen wird, und der von dem Primärkolben (30) des Hauptzylinders (14) ausgeübten Kraft zu gewährleisten.

2. Servobremse (10) nach Anspruch 1, **dadurch gekennzeichnet, dass** das vordere Ende (48) des Tasters (44) eine einzige Nase (50) aufweist, die koaxial zum Taster (44) verläuft.

3. Servobremse (10) nach dem vorhergehenden Anspruch, **dadurch gekennzeichnet, dass** die Nase (50) im Wesentlichen zylindrisch ist und ihr Durchmesser kleiner ist als der Durchmesser des Tasters (44).

4. Servobremse (10) nach Anspruch 2, **dadurch gekennzeichnet, dass** der Durchmesser der Nase (50) dem Durchmesser des Tasters (44) entspricht.

5. Servobremse (10) nach Anspruch 3, **dadurch gekennzeichnet, dass** das Ende (48) der Nase aus einer ebenen, quer verlaufenden Fläche besteht.

6. Servobremse (10) nach Anspruch 3 oder 4, **dadurch gekennzeichnet, dass** das Ende (48) der Nase (50) aus einer ebenen, quer verlaufenden Fläche besteht, in die ein Hohlraum (52) mündet.

7. Servobremse (10) nach dem vorhergehenden Anspruch, **dadurch gekennzeichnet, dass** der Hohlraum (52) eine kegelstumpfartige Form besitzt.

8. Servobremse (10) nach Anspruch 5, **dadurch gekennzeichnet, dass** das Ende (48) der Nase (50) eine kegelstumpfartige Form besitzt.
